# EUROPEAN PATENT APPLICATION

(11) **EP 4 518 087 A1**
(43) Date of publication of application: **05.03.2025**
(21) Application number: 23795394.8
(22) Date of filing: 25.04.2023
(51) Int. Cl.: H02J 7/00

(54) **CHARGING DEVICE, BATTERY PACK, EXTERNAL DEVICE AND DATA TRANSMISSION SYSTEM**

(30) Priority: 28.04.2022 CN 202210457481; 31.08.2022 CN 202211060907; 22.03.2023 CN 202310284069
(71) Applicant: Positec Power Tools (Suzhou) Co., Ltd., Suzhou, Jiangsu 215123 (CN)
(72) Inventor: LV, Shaofeng, Suzhou, Jiangsu 215123 (CN); BAO, Linjie, Suzhou, Jiangsu 215123 (CN); ZHOU, Yi, Suzhou, Jiangsu 215123 (CN); WU, Jie, Suzhou, Jiangsu 215123 (CN)
(74) Representative: Kilburn & Strode LLP
(86) International application number: PCT/CN2023/090554
(87) International publication number: WO 2023/207962

(57) **Abstract**

This disclosure relates to the field of electric tool technologies, and specifically discloses a charging device, a battery pack, an external device, and a data transmission system. The charging device includes at least a first digital communication module, a second digital communication module, and a first digital signal terminal and a second digital signal terminal respectively connected to the first digital communication module and the second digital communication module. When the charging device is connected to the battery pack, the charging device can perform digital communication with the battery pack through at least one of the digital communication terminals. Therefore, adaptability of the charging device is improved.

## Description

This application claims priority to Chinese Patent Application No. "CN202210457481.3" filed on April 28, 2022, Chinese Patent Application No. "CN202211060907.8" filed on August 31, 2022, and Chinese Patent Application No. "CN202310284069.0" filed on March 22, 2023.

### TECHNICAL FIELD

The present disclosure relates to the field of electric tool technologies, and in particular, to a charging device, a battery pack, an external device, and a data transmission system.

### BACKGROUND

In the electric tool industry, connection terminals matched with each other are usually arranged between a battery pack and an external device (such as an electric tool, a charger, and the like). The connection terminals may include signal terminals, power transmission terminals, and the like.

In a conventional solution, the battery pack is generally connected to the external device through an electrical terminal, to interact with the external device. Generally, the electrical terminal includes an electric energy transmission terminal and a communication terminal. The communication terminal includes an analog signal terminal and a digital signal terminal. The battery pack performs analog signal communication with the external device through the analog signal terminal, or performs digital signal communication through the digital signal terminal. Because a conventional battery pack has an undiversified type of communication terminal, with the development of technologies, a communication manner of the external device also changes, resulting in that the conventional battery pack is incompatible with a plurality of types of external devices.

### SUMMARY

Based on this, it is necessary to provide a charging device, a battery pack, an external device, and a data transmission system for the foregoing problems.

A charging device is provided. The charging device is configured to charge a battery pack, wherein the charging device comprises: a battery pack mounting portion, configured to detachably mount the battery pack, wherein the battery pack mounting portion comprises a plurality of electrical terminals, and the charging device is electrically connectable to the battery pack through the electrical terminals; and a control module, wherein the control module is connected to the electrical terminals, and configured to obtain a parameter of the battery pack through the electrical terminals, and control a charging process according to the parameter of the battery pack; and the control module comprises at least a first digital communication module and a second digital communication module, the electrical terminals comprise at least a first digital signal terminal and a second digital signal terminal, the first digital communication module is connected to the first digital signal terminal, and configured to perform digital communication in a first digital communication manner through the first digital signal terminal, and the second digital communication module is connected to the second digital signal terminal, and configured to perform digital communication in a second digital communication manner through the second digital signal terminal; and when the charging device is connected to the battery pack, the charging device performs digital communication with the battery pack through at least one of the first digital signal terminal and the second digital signal terminal.

In at least one embodiment, the control module determines whether a digital signal matching the first digital communication module is received, and communicates by using the first digital communication module when the digital signal matching the first digital communication module is received; and when the digital signal matching the first digital communication module is not received, the control module determines whether a digital signal matching the second digital communication module is received, and communicates by using the second digital communication module when the digital signal matching the second digital communication module is received.

In at least one embodiment, in a charging process, when the control module detects that the first digital communication module fails to communicate, the control module performs digital communication through the second digital communication module, and controls the charging process to continue.

In at least one embodiment, the control module further comprises a first analog communication module, the electrical terminals further comprise a first analog signal terminal connected to the first analog communication module, and the first analog communication module performs analog signal communication with the battery pack through the first analog signal terminal, to receive an external failure status signal and an activation status signal of the battery pack; when the charging device performs digital communication through the first communication module, the charging device receives the failure status signal through the first analog communication module, and controls the charging process of the battery pack according to the received failure status signal; and when the charging device performs digital communication through the second communication module, the charging device receives the parameter of the battery pack through the second digital communication module, and controls the charging process of the battery pack according to the parameter of the battery pack.

In at least one embodiment, in the charging process, when the control module detects that the first digital communication module fails to communicate, the control module controls the charging device to stop charging the battery pack.

In at least one embodiment, the first digital communication manner is CAN communication, and the second digital communication manner is serial communication.

In at least one embodiment, the electrical terminals further comprise a first positive terminal, a first negative terminal, and a first analog signal terminal; the first digital signal terminal comprises a first contact terminal and a second contact terminal, and the first contact terminal and the second contact terminal are insulated from each other; and in a first direction, projections of the first contact terminal and the second contact terminal at least partially overlap, and the projections of the first contact terminal and the second contact terminal do not overlap with any one of the projections of the first positive terminal, the first negative terminal, the first analog signal terminal, and the second digital signal terminal, wherein the first direction is perpendicular to an engaging direction of the battery pack, and is perpendicular to an arrangement direction of the first positive terminal, the first negative terminal, the first analog signal terminal, and the second digital signal terminal.

In at least one embodiment, the electrical terminals further comprise a first positive terminal, a first negative terminal, and a first analog signal terminal; the first digital signal terminal comprises a first contact terminal and a second contact terminal, and the first contact terminal and the second contact terminal are insulated from each other; and in a first direction, projections of the first contact terminal and the second contact terminal are parallel, and the projections of the first contact terminal and the second contact terminal are parallel to projections of the first positive terminal, the first negative terminal, the first analog signal terminal, and the second digital signal terminal, wherein the first direction is perpendicular to a direction in which the battery pack is engaged to the external device, and is perpendicular to an arrangement direction of the first contact terminal, the second contact terminal, the first positive terminal, the first negative terminal, the first analog signal terminal, and the second digital signal terminal.

An electrical device is provided. The electrical device is configured to be detachably connectable to a battery pack, to charge the battery pack or obtain electric energy from the battery pack, the electrical device comprising: a battery pack mounting portion, configured to mount a battery pack, wherein the battery pack mounting portion comprises a plurality of electrical terminals, and the electrical device is electrically connectable to the battery pack through the electrical terminals; a control module, wherein the control module is connected to the electrical terminals, and configured to obtain a parameter of the battery pack through the electrical terminals, and control a charging process according to the parameter of the battery pack; and the control module comprises at least a first digital communication module and a second digital communication module, the electrical terminals comprise at least a first digital signal terminal and a second digital signal terminal, the first digital communication module is connected to the first digital signal terminal, and configured to perform digital communication in a first digital communication manner through the first digital signal terminal, and the second digital communication module is connected to the second digital signal terminal, and configured to perform digital communication in a second digital communication manner through the second digital signal terminal; and when the electrical device is connected to the battery pack, the electrical device performs digital communication with the battery pack through at least one of the first digital signal terminal and the second digital signal terminal.

A battery pack is provided. The battery pack is configured to be engaged with the charging device according to any one of claims 1 to 8, wherein the battery pack comprises: a housing; a battery cell, wherein the battery cell is arranged in the housing, and configured to store or release electric energy; a control module, wherein the control module is connected to the battery cell, and configured to detect a parameter of the battery cell and send the battery cell to an external electrical device, so that the charging device controls charging and discharging processes of the battery pack according to the parameter; and an electrode holder, wherein the electrode holder is arranged on the housing, and comprises a plurality of electrical terminals, the plurality of electrical terminals are connected to the control module, and the battery pack is engaged with the electrical device through the electrical terminals and interacting with the electrical device, wherein the control module comprises at least a third digital communication module and a fourth digital communication module, the electrical terminals comprise at least a third digital signal terminal and a fourth digital signal terminal, the third digital communication module is configured to perform digital signal communication with the charging device in a first digital communication manner through the third digital signal terminal, and the fourth digital communication module is configured to perform digital signal communication with the charging device in a second digital communication manner through the fourth digital signal terminal; and when the battery pack is connected to the charging device, the third digital signal terminal is electrically connected to the first digital signal terminal, the fourth digital signal terminal is electrically connected to the second digital signal terminal, and the battery pack performs digital signal communication with the charging device through at least one of the third digital signal terminal and the fourth digital signal terminal.

In at least one embodiment, the first digital communication manner is CAN communication, and the second digital communication manner is serial communication.

In at least one embodiment, the electrical terminals further comprise a second analog signal terminal, and the second analog signal terminal is configured to perform analog signal communication with the engaged charging device; the electrical terminals further comprise a second positive terminal and a second negative terminal; and the electrode holder comprises five terminal slots, a partition is arranged between adjacent terminal slots, an extending direction of each terminal slot is perpendicular to an engaging direction of the battery pack, and the five terminal slots are configured to respectively accommodate the second positive terminal, the second negative terminal, the second analog signal terminal, the third digital signal terminal, and the fourth digital signal terminal, wherein the third digital signal terminal comprises a third contact terminal and a fourth contact terminal, the third contact terminal and the fourth contact terminal are arranged in a same terminal slot, the third contact terminal and the fourth contact terminal are arranged in the extending direction of the terminal slot, and the third contact terminal and the fourth contact terminal are insulated from each other.

In at least one embodiment, the electrical terminals further comprise a second analog signal terminal, and the second analog signal terminal is configured to perform analog signal communication with the engaged charging device; the electrical terminals further comprise a second positive terminal and a second negative terminal; and the electrode holder comprises six terminal slots, a partition is arranged between adjacent terminal slots, and an extending direction of each terminal slot is perpendicular to an engaging direction of the battery pack; and the third digital signal terminal comprises a third contact terminal and a fourth contact terminal, and the six terminal slots are configured to respectively accommodate the second positive terminal, the second negative terminal, the second analog signal terminal, the third contact terminal, the fourth contact terminal, and the fourth digital signal terminal.

A data transmission system is provided. The data transmission system comprises a charging apparatus and a battery pack, wherein the battery pack is detachably mounted with the charging apparatus, and configured to obtain electric energy from the charging apparatus; the charging apparatus comprises at least a first digital communication module, a second digital communication module, a first digital communication terminal connected to the first digital communication module, and a second digital communication terminal connected to the second digital communication module, the first digital communication module is configured to perform digital communication in a first digital communication manner through the first digital signal terminal, and the second digital communication module is configured to perform digital communication in a second digital communication manner through the second digital signal terminal; the battery pack comprises at least a third digital communication module, a fourth digital communication module, a third digital communication terminal connected to the third digital communication module, and a fourth digital communication terminal connected to the fourth digital communication module, the third digital communication module is configured to perform digital communication in the first digital communication manner through the third digital signal terminal, and the fourth digital communication module is configured to perform digital communication in the second digital communication manner through the fourth digital signal terminal; when the battery pack is engaged with the charging device, the third digital communication terminal is engaged with the first digital communication terminal, and the fourth digital communication terminal is engaged with the second digital communication terminal; and the power system further comprises a control module configured to control the charging apparatus to perform digital communication with the battery pack in at least one of the first digital communication manner and the second digital communication manner.

A battery pack is provided. The battery pack comprises: a housing; a battery cell, wherein the battery cell is arranged in the housing, and configured to store or release electric energy; a charging and discharging circuit, wherein the charging and discharging circuit is connected to the battery cell; a main control module, wherein the main control module is connected to the charging and discharging circuit, and configured to control the charging and the discharging processes of the battery cell by using the charging and discharging circuit; and an electrode holder, wherein the electrode holder is arranged on the housing, and is connected to the charging and discharging circuit and the main control module; the battery pack is engaged with the external device and performs electrical energy interaction and data interaction with the external device, and the electrode holder comprises at least a first digital signal terminal and a second digital signal terminal; when the battery pack is connected to the external device, the battery pack performs digital signal communication with the external device through at least one of the first digital signal terminal and the second digital signal terminal.

In at least one embodiment, a first digital signal terminal is a differential communication terminal, and a second digital signal terminal is a serial communication terminal.

In at least one embodiment, the differential communication terminal includes a CAN communication terminal, and the serial communication terminal includes a UART communication terminal.

In at least one embodiment, the main control module is configured to detect a type of a digital signal terminal of an engaged external device, and control, according to the detected type of the digital signal terminal type of the external device, the battery pack to perform digital signal communication through at least one of the first digital signal terminal and the second digital signal terminal that match the type of the digital signal terminal of the external device.

In at least one embodiment, when detecting that the external device has a third digital signal terminal that matches the first digital signal terminal and has a fourth digital signal terminal that matches the second digital signal terminal, the main control module controls the battery pack to perform digital signal communication with the third digital signal terminal and the fourth digital signal terminal of the external device respectively through the first digital signal terminal and the second digital signal terminal.

In at least one embodiment, the battery pack receives, through the first digital signal terminal, a control signal transmitted by the external device through the third digital signal terminal.

In at least one embodiment, the first digital signal terminal and the second digital signal terminal each have corresponding priorities. When detecting that the external device has a third digital signal terminal that matches the first digital signal terminal and has a fourth digital signal terminal that matches the second digital signal terminal, the main control module controls, according to the priorities, the battery pack to perform digital signal communication with the third digital signal terminal or the fourth digital signal terminal that matches the external device through the first digital signal terminal or the second digital signal terminal.

In at least one embodiment, the priority of the first digital signal terminal is higher than the priority of the second digital signal terminal.

In at least one embodiment, the electrode holder terminal further includes an analog signal terminal, and the analog signal terminal is configured to perform analog signal communication with the engaged external device.

In at least one embodiment, the main control module detects, through the analog signal terminal, whether an external device is connected, when detecting that the external device is connected, controls the first digital signal terminal to send a first handshake signal, and controls the second digital signal terminal to send a second handshake signal; and when detecting that both the first digital signal terminal and the second digital signal terminal receive corresponding reply signals, controls at least one of the first digital signal terminal and the second digital signal terminal to communicate with the external device; or when detecting that one of the first digital signal terminal and the second digital signal terminal receives a corresponding reply signal, controls the first digital signal terminal or the second digital signal terminal that receives the reply signal to communicate with the external device.

In at least one embodiment, an electrode holder further includes a positive terminal and a negative terminal. The electrode holder includes at least five terminal slots configured to respectively accommodate the positive terminal, the negative terminal, the analog signal terminal, the first digital signal terminal, and the second digital signal terminal.

In at least one embodiment, the first digital signal terminal is a differential communication terminal. The differential communication terminal includes a first signal electrode plate and a second signal electrode plate. The first signal electrode plate and the second signal electrode plate are arranged vertically in a direction perpendicular to an engaging direction in which the battery pack is engaged to the external device, and the first signal electrode plate and the second signal electrode plate are insulated from each other.

In at least one embodiment, the electrode holder includes six terminal slots. The first digital signal terminal is a differential communication terminal. The differential communication terminal includes a first signal electrode plate and a second signal electrode plate. The six terminal slots are configured to respectively accommodate the positive terminal, the negative terminal, the analog signal terminal, the first signal electrode plate and the second signal electrode plate of the differential communication terminal, and the second digital signal terminal.

An external device is provided. The external device includes any one of a charging apparatus and an electric tool. The external device includes at least a third digital signal terminal and a fourth digital signal terminal. The third digital signal terminal and the fourth digital signal terminal match the first digital signal terminal and the second digital signal terminal in the battery pack respectively. The external device is engaged with the battery pack through at least one of the third digital signal terminal and the fourth digital signal terminal, and interacts with the battery pack.

In at least one embodiment, the third digital signal terminal is a differential communication terminal, and the fourth digital signal terminal is a serial communication terminal.

In at least one embodiment, the differential communication terminal includes a CAN communication terminal, and the serial communication terminal includes a UART communication terminal.

In at least one embodiment, when detecting an engaged battery pack, the external device obtains a type of a digital signal terminal of the battery pack, and communicates with the battery pack by using at least one of the third digital signal terminal and the fourth digital signal terminal that matches the type of the digital signal terminal of the battery pack.

In at least one embodiment, when detecting that the battery pack has a first digital signal terminal that matches the third digital signal terminal and has a second digital signal terminal that matches the fourth digital signal terminal, the external device communicates with the first digital signal terminal and the second digital signal terminal of the battery pack respectively through the third digital signal terminal and the fourth digital signal terminal.

In at least one embodiment, the external device transmits a control signal to the first digital signal terminal of the battery pack through the third digital signal terminal.

In at least one embodiment, the third digital signal terminal and the fourth digital signal terminal each have corresponding priorities. When detecting that the battery pack has the first digital signal terminal that matches the third digital signal terminal and has the second digital signal terminal that matches the fourth digital signal terminal, the external device controls to communicate, through the third digital signal terminal or the fourth digital signal terminal according to the priorities, with the first digital signal terminal or the second digital signal terminal that matches the battery pack.

In at least one embodiment, the priority of the third digital signal terminal is higher than the priority of the fourth digital signal terminal.

In at least one embodiment, the external device further includes an analog signal terminal. The analog signal terminal is configured to perform analog signal communication with the engaged battery pack.

In at least one embodiment, the external device detects, through the analog signal terminal, whether a battery pack is connected, when detecting that the battery pack is connected, controls the third digital signal terminal to send a first handshake signal, and controls the fourth digital signal terminal to send a second handshake signal; when detecting that both the third digital signal terminal and the fourth digital signal terminal receive corresponding reply signals, controls at least one of the third digital signal terminal and the fourth digital signal terminal to communicate with the battery pack; or
when detecting that one of the third digital signal terminal and the fourth digital signal terminal receives a corresponding reply signal, controls the third digital signal terminal or the fourth digital signal terminal that receives the reply signal to communicate with the battery pack.

In at least one embodiment, the external device further includes a positive terminal, a negative terminal, and at least five terminal slots. The at least five terminal slots are configured to respectively accommodate the positive terminal, the negative terminal, the analog signal terminal, the first digital signal terminal, and the second digital signal terminal.

In at least one embodiment, the first digital signal terminal is a differential communication terminal. The differential communication terminal includes a first plug sheet and a second plug sheet. Projections of the first plug sheet and the second plug sheet overlap on a projection surface perpendicular to the engaging direction of the battery pack, and the first signal electrode plate and the second signal electrode plate are insulated from each other.

In at least one embodiment, the first digital signal terminal is a differential communication terminal. The differential communication terminal includes a first plug sheet and a second plug sheet. Projections of the first plug sheet and the second plug sheet are parallel on a projection surface perpendicular to the engaging direction of the battery pack.

A data transmission system is provided, including the battery pack and the external device.

### BRIEF DESCRIPTION OF THE DRAWINGS

FIG. 1 is a schematic structural diagram of a data transmission system according to an embodiment of this application;
FIG. 2 is a schematic structural diagram of a data transmission system according to another embodiment of this application;
FIG. 3 is a schematic structural diagram of a connection between a battery pack and a charging device through an analog signal terminal;
FIG. 4 is a control sequence diagram corresponding to the structure in FIG. 3;
FIG. 5 is a schematic structural diagram of electrical terminals on a charging device side; and
FIG. 6 is a schematic structural diagram of electrical terminals on a battery pack side.

### DETAILED DESCRIPTION

For ease of understanding the present disclosure, the present disclosure is described more comprehensively below with reference to related accompanying drawings. Preferred implementations of the present disclosure are shown in the accompanying drawings. However, the present disclosure may be implemented in many different forms, and is not limited to the implementations described in this specification. On the contrary, the implementations are provided for more thorough and comprehensive understanding of the disclosure of the present application.

In the present disclosure, it should be noted that unless otherwise explicitly specified and limited, the terms such as "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art may understand the specific meanings of the foregoing terms in the present disclosure according to specific situations.

The terms "first" and "second" are used merely for the purpose of description, and shall not be construed as indicating or implying relative importance or implying a quantity of indicated technical features. Therefore, a feature restricted by "first" or "second" may explicitly or implicitly include at least one of such features. In the descriptions of the present disclosure, unless explicitly specified, "a plurality of" means at least two, for example, two or three.

Unless otherwise defined, meanings of all technical and scientific terms used in the specification are the same as that usually understood by a person skilled in the technical field to which the present disclosure belongs. In the present disclosure, terms used in the specification of the present disclosure are merely intended to describe objectives of the specific embodiments, but are not intended to limit the present disclosure. The term "and/or" used in this specification includes any or all combinations of one or more related listed items.

The battery pack can be electrically connected to an external device such as an electric tool or a charger, to charge the electric tool or obtain electric energy from the charger, and can also perform data transmission with the electric tool and the charger. Generally, electrical terminals matched with each other are arranged on both the battery pack and the external device. The electrical terminals include signal terminals, power transmission terminals, and the like. The signal terminal is configured to transmit a data signal between the battery pack and the external device. The power transmission terminal is configured to transmit a power signal between the battery pack and the external device. For the signal terminals, in a conventional solution, a group of analog signal terminals and a group of digital signal terminals are generally configured between the battery pack and the external device. When communicating with the external device, the battery pack is first activated and powered on through the analog signal terminals, and then transmits data through the digital signal terminals. Because a conventional battery pack or external device can only communicate with an external device or battery pack of a specific communication type, and cannot communicate with another electric tool or battery pack, use of the battery pack or external device is limited.

Therefore, embodiments of this application provide a charging device, a battery pack, an external device, and a data transmission system.

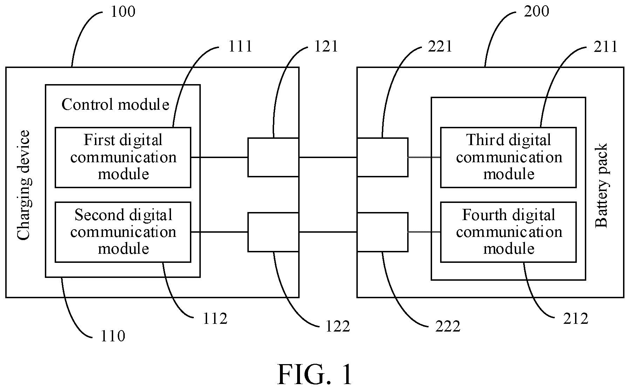

As shown in FIG. 1, an embodiment of this application provides a charging device 100, configured to charge a battery pack 200. The charging device 100 includes a battery pack mounting portion, configured to detachably mount the battery pack 200. The battery pack mounting portion includes a plurality of electrical terminals. The charging device 100 is connected to electrical terminals on the battery pack 200 side through the electrical terminals, to communicate with the battery pack 200 and transmit power to the battery pack 200. The charging device 100 further includes a control module 110. The control module 110 is connected to the electrical terminals, and is configured to obtain a parameter of the battery pack through the electrical terminals, and control a charging process of the battery pack 200 according to the parameter of the battery pack 200.

Referring to FIG. 1, the control module 110 of the charging device 100 includes at least a first digital communication module 111 and a second digital communication module 112. The electrical terminals include at least a first digital signal terminal 121 and a second digital signal terminal 122. The first digital communication module 111 is connected to the first digital signal terminal 121, and is configured to perform digital signal communication in a first digital communication manner through the first digital signal terminal 121. The second digital communication module 112 is connected to the second digital signal terminal 122, and is configured to perform digital signal communication in a second digital communication manner through the second digital signal terminal 122. When the charging device 100 is connected to the battery pack 200, the charging device 100 performs digital signal communication with the battery pack 200 through at least one of the first digital signal terminal 121 and the second digital signal terminal 122.

In this embodiment, the first digital communication manner and the second digital communication manner are two digital signal communication manners of different communication types. Two different digital communication modules are integrated in the charging device 100, to match battery packs 200 with different types of digital communication modules, thereby improving adaptability of the charging device 100. In this way, a plurality of battery packs 200 with different digital communication modules can all be mounted on the charging device 100 provided in this application for charging.

It can be understood that, the first digital communication module 111 and the second digital communication module 112 are integrated in the control module 110 in some embodiments, or are independent of the control module 110 and connected to the control module 110 in some other embodiments.

In an example, not only two types of digital communication modules, but also three or more types of digital communication modules are arranged on the charging device 100 side. Correspondingly, digital signal terminals corresponding to the three or more types of digital communication modules are arranged as the electrical terminals of the charging device 100 in some embodiments, to improve the adaptability of the charging device 100.

Preferably, the first digital communication manner is controller area network (CAN) communication, and the second digital communication manner is serial communication. In other words, in this embodiment, the first digital communication module 111 on the charging device 100 side is a CAN communication module, and the second digital communication module 112 is a serial communication module. More specifically, the second digital communication module 112 is a universal asynchronous receiver/transmitter (UART) communication module. The CAN communication is extendable, and a plurality of slaves can be hooked up on a CAN bus. Therefore, by arranging the CAN communication module on the charging device 100, the charging device 100 can charge a plurality of battery packs 200 at the same time or at different times, and communicate with the plurality of battery packs 200. The UART communication manner has an anti-interference feature, so that the UART communication manner can be used in scenarios such as an electromagnetic interference environment and a power transmission line area. When the charging device 100 performs digital signal communication in the UART communication manner, communication stability is high.

In another example, both the first digital communication module 111 and the second digital communication module 112 are serial communication modules, to match battery packs 200 with different serial communication modules. For example, the first digital communication module 111 is a UART communication module, and the second digital communication module is an RS232 communication module. Certainly, the first digital communication module 111 and the second digital communication module 112 are alternatively other types of serial communication modules in some embodiments, which can be selected according to actual requirements.

In at least one embodiment, when the charging device 100 communicates with the battery pack 200, the control module 110 of the charging device 100 determines whether a digital signal matching the first digital communication module 111 is received, and communicates through the first digital communication module 111 when the digital signal matching the first digital communication module 111 is received; and when the digital signal matching the first digital communication module 111 is not received, the control module 110 determines whether a digital signal matching the second digital communication module 112 is received, and communicates through the second digital communication module 112 when the digital signal matching the second digital communication module 112 is received. After the communication succeeds, the charging device 100 starts the charging process of the battery pack 200.

Specifically, when performing digital signal communication with the battery pack 200, the charging device 100 first communicates with the battery pack 200 by using a digital communication module with a higher priority according to preset priorities. In this embodiment, a priority of the first digital communication module 111 is higher than a priority of the second digital communication module 112. To be specific, the charging device 100 first sends a handshake signal to the battery pack 200 through the first digital communication module 111. If the charging device 100 receives a digital signal fed back by the battery pack 200 through the first digital communication module 111, digital communication is performed between the charging device 100 and the battery pack 200 in the first digital communication manner. If the charging device 100 does not receive the digital signal fed back by the battery pack 200 through the first digital communication module 111, it is determined that the battery pack 200 does not have a corresponding digital communication module. In this case, the charging device 100 sends a handshake signal to the battery pack 200 through the second digital communication module 112. If the charging device 100 receives a digital signal fed back by the battery pack 200 through the second digital communication module 112, digital communication is performed between the charging device 100 and the battery pack 200 in the second digital communication manner. If the charging device 100 does not receive the digital signal fed back by the battery pack through the second digital communication module either, it is determined that the digital communication module of the battery pack 200 does not match the two digital communication modules in the charging device 100, and the charging device 10 does not start charging the battery pack 200.

Because a data transmission speed of the CAN communication is high, in this embodiment, the charging device 100 first sends the handshake signal by using the CAN communication module, and sends the handshake signal by using the serial communication module if a CAN communication handshake fails. Certainly, in other implementations, the charging device 100 alternatively first sends the handshake signal by using the serial communication module, and then sends the handshake signal by using the CAN communication when serial communication fails, which can be adjusted according to a use scenario.

In another example, the control module 110 alternatively sends the handshake signal to the battery pack 200 through both the CAN communication module and the serial communication module at the same time, and determines whether a handshake signal fed back by the battery pack 200 is received through the CAN communication module or the serial communication module. If the control module 110 receives, through the two digital communication modules, the handshake signal fed back by the battery pack 200, the control module 110 first communicates with the battery pack by using the CAN communication module, and starts charging the battery pack 200. When receiving a feedback signal through only one of the digital communication modules, the control module 110 communicates with the battery pack 200 by using the corresponding digital communication module, and starts charging the battery pack 200. When the control module 110 does not receive the feedback signal from the battery pack 200, the control module 110 does not start charging the battery pack 200.

An embodiment of this application further provides a battery pack. As shown in FIG. 1, the battery pack 200 includes a third digital communication module 211 and a fourth digital communication module 212, and the electrical terminals on the battery pack 200 side includes a third digital signal terminal 221 and a fourth digital signal terminal 222. The third digital communication module 211 is configured to perform digital communication in the first digital signal communication manner through the third digital signal terminal 221, and the fourth digital communication module 212 is configured to perform digital communication in the second digital signal communication manner through the fourth digital signal terminal 222. Correspondingly, the first digital communication manner is CAN communication, and the second digital communication manner is serial communication. In other words, the third digital communication module 211 is a CAN communication module, and the fourth digital communication module 212 is a serial communication module. More specifically, the fourth digital communication module 212 is a UART communication module. Therefore, when the charging device 100 provided in this application charges the battery pack 200 provided in this application, the first digital signal terminal 121 is engaged with the third digital signal terminal 221, and the second digital signal terminal 122 is engaged with the fourth digital signal terminal 222. The charging device 100 can communicate with the battery pack 200 by using any one of the digital communication modules. Preferably, because a data transmission speed of the CAN communication is high, digital signal communication is performed between the charging device 100 and the battery pack 200 first by using the CAN communication module.

In an embodiment, in the charging process, when the control module 110 of the charging device 100 detects that the first digital communication module 111 fails to communicate, the control module 110 performs digital communication through the second digital communication module 112, and controls the charging process to continue.

To be specific, during actual application, when the charging device 100 is connected to the battery pack 200, a plurality of groups of corresponding digital signal terminals all remain a connected state. However, during data transmission, a group of connected digital signal terminals are selected for digital communication, and other groups of connected digital signal terminals can be used as candidate signal terminals. When a current signal terminal for communication has a poor connection or a current digital communication module fails, other groups of connected digital communication modules and digital signal terminals are selected for digital communication. In this embodiment, because a priority of the CAN communication is higher than a priority of the serial communication, digital communication is performed between the charging device 100 and the battery pack 200 first by using the CAN communication module. When the CAN communication fails, digital communication is performed by using the serial communication module. This can prevent a problem of a failure and a shutdown when a signal terminal is loosened or damaged, a communication module fails, or other abnormal connection states occur, and ensure that when one of the digital communication between the charging device 100 and the battery pack 200 fails, normal communication can also be performed through other spare digital communication modules, thereby ensuring normal operation of the entire system.

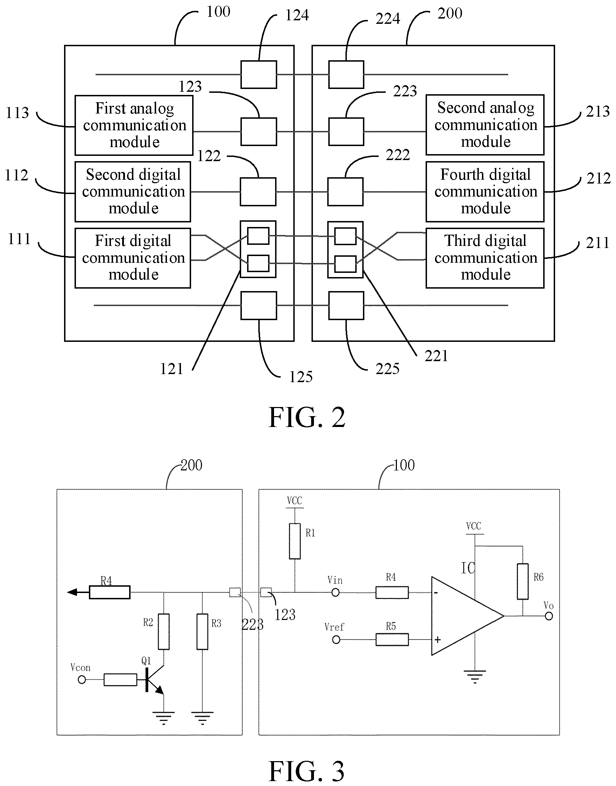

Referring to FIG. 2, in at least one embodiment, the control module 110 of the charging device 100 further includes a first analog communication module 113 and a first analog signal terminal 123 connected to the first analog communication module 113. Correspondingly, the side of the battery pack 200 includes a second analog communication module 213 and a second analog signal terminal 223 connected to the second analog communication module 213. When the charging device 100 is engaged with the battery pack 200, the second analog signal terminal 223 is engaged with the first analog signal terminal 123, so that the charging device 100 can perform analog signal communication with the battery pack 200 through the first analog communication module 113 and the second analog communication module 213, receive status information of the battery pack 200, and control charging and discharging processes according to the status information of the battery pack 200. The status information of the battery pack 200 includes a failure state of the battery pack 200 or an activation state of the battery pack 200. That is, the charging device 100 can determine, through the analog signal terminal, whether the battery pack 200 fails, and whether the battery pack 200 is engaged with the charging device 100.

FIG. 3 shows a specific example in which the charging device 200 is connected to the battery pack 100 through the analog signal terminal and the analog communication module. In FIG. 3, a circuit status of the second analog communication module in the battery pack 200 is shown on the left, and a circuit status of the first analog communication module in the charging device 100 is shown on the right. The battery pack 200 is connected to the charging device 100 through the analog signal terminal.

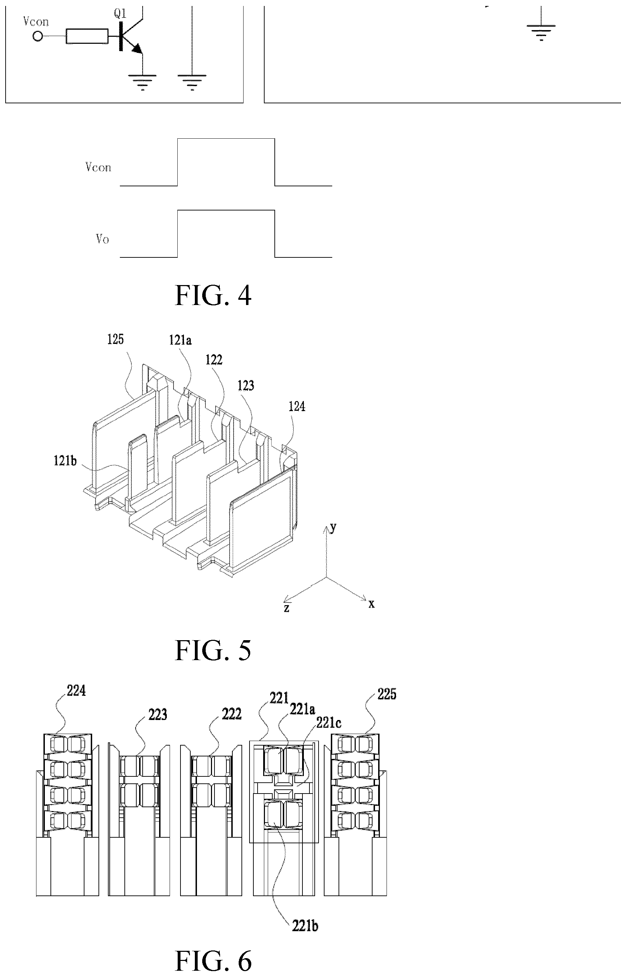

FIG. 4 is a schematic diagram of a voltage of a control signal Vcon of a drive transistor in the battery pack and a voltage at an analog signal receiving end Vo in the charging device. As shown in FIG. 3 and FIG. 4, a drive transistor Q1 is controlled by a controller in the battery pack 200. When Q1 is turned on (Vcon=H), a voltage at the analog signal terminal on the side of the charging device 100 is Vo=VCC; and when Q1 is turned off (Vcon=L), a voltage at an analog signal connection terminal on the side of the charging device 100 is Vo=L, where V1<Vref<V2. That is, on the side of the battery pack 200, impedance to ground in the battery pack 100 can be controlled by controlling turn-on or turn-off of Q1, to control the voltage at the analog signal terminal and control the voltage of Vo. In the charging device 100, Vo is directly connected to the control module 110 of the charging device 100, and the control module 110 determines the status of the battery pack based on a level of Vo. When the battery pack 200 is engaged with the charging device 100, the side of the battery pack 200 adjusts an output voltage at the analog signal terminal by controlling the transistor Q1, so that the charging device 100 can activate the battery pack 200 according to the voltage at the analog signal terminal. When a failure occurs on the side of the battery pack, the side of the battery pack 200 actively reduces the voltage at the analog signal terminal. The side of the charging device 100 can determine, based on a low-voltage state of the analog signal terminal, that the battery pack 200 is currently in the failure state, and immediately stop charging the battery pack 200.

When the charging device 100 charges the battery pack 200, the charging device 100 performs digital signal communication with the battery pack 200 through the digital communication module, and performs analog signal communication with the battery pack 200 through the analog signal communication module. Specifically, when the battery pack 200 is engaged with the charging device 100, the side of the battery pack 200 controls the voltage at the analog signal terminal, so that the side of the charging device 100 can learn, based on the voltage at the analog signal terminal, that the battery pack 200 is connected. Then the charging device 100 sends a handshake signal through the CAN communication module, and determines whether the CAN communication signal fed back by the battery pack 200 is received. If the CAN communication signal fed back by the battery pack 200 is received, digital communication is performed between the charging device 100 and the battery pack 200 by using the CAN communication module.

Further, during digital communication between the charging device 100 and the battery pack 200 by using the CAN communication module, the control module 110 monitors the voltage at the analog signal communication terminal in real time, and determines, based on the voltage at the analog signal terminal, whether a failure such as an overcurrent, an overvoltage, or an over-temperature occurs in the battery pack 200, or whether the battery pack 200 is fully charged. When determining that the battery pack 200 fails or the battery pack 200 is fully charged, the control module 110 controls the charging device 100 to stop charging the battery pack 200.

When the charging device 100 fails to communicate with the battery pack 200 by using the CAN communication module, the charging device 100 communicates with the battery pack by using the serial communication module. In addition, during the serial communication, the control module 110 no longer receives a voltage status at the analog signal terminal, but determines, based on the parameter of the battery pack 200 received during the serial communication, whether the battery pack 200 fails, and controls the charging device 100 to stop charging the battery pack 200 when the battery pack 200 fails. A reason for such an arrangement is that, before the charging device 100 performs CAN communication with the battery pack 200, it is necessary to first determine, based on a level state received at the analog signal terminal, whether the battery pack is connected, and when it is determined that the battery pack is connected, a digital communication address is assigned to the battery pack before the CAN communication can be performed. If the CAN communication fails, the analog signal communication fails in some embodiments, for example, engagement of the analog signal terminal is unstable, or the analog communication module fails. Therefore, when the charging device 100 and the battery pack 200 switch to the serial communication module for digital communication, because the analog signal communication fails in some embodiments, the charging device 100 no longer detects the voltage at the analog signal terminal, but determines, based on the information such as the voltage, the current, and the temperature of the battery pack 200 received in the digital communication process, whether the battery pack 200 fails or whether the battery pack is fully charged, and stops charging when the battery pack 200 fails or the battery pack 200 is fully charged.

In the foregoing embodiment, the charging device 100 and the battery pack 200 can transmit the failure state through the analog signal terminal, and can transmit the parameter of the battery pack 200 through the digital signal terminal, so that an end of the charging device 100 can learn specific failure information of the battery pack 200. Therefore, even though the analog signal terminals are in poor contact, whether the battery pack 200 fails can still be determined through digital signal communication, thereby implementing a double charging guarantee, and improving charging safety.

In another implementation, when the charging device 100 fails to communicate with the battery pack 200 by using the first digital communication module 111, the charging device 100 stops charging the battery pack 200 and no longer switches to the second digital communication module 112 for digital signal communication. That is, it can be determined, according to an actual requirement, whether to switch the digital communication module when the CAN communication module fails to communicate.

In an embodiment, as shown in FIG. 2, the electrical terminals of the charging device 100 further include a first positive terminal 124 and a first negative terminal 125. The side of the battery pack 200 includes a second positive terminal 224 and a second negative terminal 225. The first positive terminal 124 is configured to be engaged with the second positive terminal 224, the first negative terminal 125 is configured to be engaged with the second negative terminal 225, and the positive and negative terminals are configured to transmit power.

In this embodiment, because the first digital signal terminal 121 is a CAN communication terminal, and the CAN communication is differential communication and requires two transmission cables to transmit data, the first digital signal terminal correspondingly includes two contact terminals that are respectively connected to the two transmission cables. The two contact terminals are a first contact terminal 121a and a second contact terminal 121b, and the first contact terminal 121a and the second contact terminal 121b are insulated from each other.

In the first direction, projections of the first contact terminal 121a and the second contact terminal 121b at least partially overlap, and the projections of the first contact terminal 121a and the second contact terminal 121b do not overlap with any one of the projections of the first positive terminal 124, the first negative terminal 125, the first analog signal terminal 123, and the second digital signal terminal 122. A first direction is perpendicular to an engaging direction of the battery pack, and is perpendicular to an arrangement direction of the first positive terminal 124, the first negative terminal 125, the first analog signal terminal 123, and the second digital signal terminal 122.

As shown in FIG. 5, the engaging direction of the battery pack is a y-direction in the figure, the arrangement direction of the electrical terminals is an x-direction, and the first direction is a z-direction. The first contact terminal 121a and the second contact terminal 121b are arranged in the z-direction.

In this embodiment, the electrical terminals on the side of the charging device 100 are plug sheets, and the plug sheets are insulated from each other. Correspondingly, a slot is arranged on the side of the battery pack 200, and a tulip contact is arranged in the slot, to receive the plug sheet and be electrically connected to the plug sheet.

As shown in FIG. 6, the battery pack 200 provided in this application includes the second positive terminal 224, the second negative terminal 225, the second analog signal terminal 223, the third digital signal terminal 221, and the fourth digital signal terminal 222. The second positive terminal 224, the second negative terminal 225, the second analog signal terminal 223, the third digital signal terminal 221, and the fourth digital signal terminal 222 are arranged at the same positions as the first positive terminal 124, the first negative terminal 125, the first analog signal terminal 123, the first digital signal terminal 121, and the second digital signal terminal 122 on the side of the charging device 100.

The electrode holder of the battery pack 200 includes five terminal slots. A partition is arranged between adjacent terminal slots, and an extending direction of each terminal slot is perpendicular to the engaging direction of the battery pack. In FIG. 6, the engaging direction of the battery pack is perpendicular to a paper surface. The five terminal slots are configured to respectively accommodate the second positive terminal 224, the second negative terminal 225, the second analog signal terminal 223, the third digital signal terminal 221, and the fourth digital signal terminal 222. The third digital signal terminal 221 includes a third contact terminal 221a and a fourth contact terminal 221b. The third contact terminal 221a and the fourth contact terminal 221b are arranged in a same terminal slot, and the two terminals are arranged in the extending direction of the terminal slot. The third contact terminal 221a and the fourth contact terminal 221b are insulated from each other. In this embodiment, the third contact terminal 221a and the fourth contact terminal 221b are insulated by arranging an insulation member 221c.

In another embodiment, six terminal slots are arranged on the side of the battery pack 200, a partition is arranged between adjacent terminal slots, and an extending direction of each terminal slot is perpendicular to the engaging direction of the battery pack. The third digital signal terminal 221 includes the third contact terminal 221a and the fourth contact terminal 221b, and the third contact terminal 221a and the fourth contact terminal 221b are respectively arranged in two terminal slots. That is, the six terminal slots are configured to respectively accommodate the second positive terminal 224, the second negative terminal 225, the second analog signal terminal 223, the third contact terminal 221a, the fourth contact terminal 221b, and the fourth digital signal terminal 222.

Correspondingly, six plug sheets are arranged on the charging device 100, and positions of the six plug sheets respectively correspond to the six terminal slots. The first digital signal terminal 121 includes a first contact terminal 121a and a second contact terminal 121b, and the first contact terminal 121a and the second contact terminal 121b are insulated from each other. Positions of the first contact terminal 121a and the second contact terminal 121b correspond to positions of the third contact terminal 221a and the fourth contact terminal 221b. In other words, in the first direction, projections of the first contact terminal 121a and the second contact terminal 121b are parallel, and projections of the first contact terminal 121a and the second contact terminal 121b are parallel to projections of the first positive terminal 124, the first negative terminal 125, the first analog signal terminal 123, and the second digital signal terminal 122. The first direction is perpendicular to the engaging direction of the battery pack, and is perpendicular to an arrangement direction of the first contact terminal 121a, the second contact terminal 121b, the first positive terminal 124, the first negative terminal 125, the first analog signal terminal 123, and the second digital signal terminal 122.

Another embodiment of this application provides an electrical device, configured to be detachably connected to a battery pack, to charge the battery pack or obtain electric energy from the battery pack. The electrical device includes a battery pack mounting portion, configured to mount a battery pack. The battery pack mounting portion includes a plurality of electrical terminals, and the electrical device is electrically connected to the battery pack through the electrical terminals. A control module is connected to the electrical terminals, to obtain a parameter of the battery pack through the electrical terminals and control a charging process according to the parameter of the battery pack. The control module includes at least a first digital communication module and a second digital communication module. The electrical terminals include at least a first digital signal terminal and a second digital signal terminal. The first digital communication module is connected to the first digital signal terminal, and is configured to perform digital communication in a first digital communication manner through the first digital signal terminal. The second digital communication module is connected to the second digital signal terminal, and is configured to perform digital communication in a second digital communication manner through the second digital signal terminal. When the electrical device is connected to the battery pack, the electrical device communicates with the battery pack through at least one of the first digital signal terminal and the second digital signal terminal.

The electrical device in the foregoing embodiments is an electric tool in some embodiments, for example, a lawn mower, a grass cutter, a blower, or a branch cutter. The electric tool is used as a host, and is configured to receive status information of the battery pack and the parameter of the battery pack, and control a discharging process of the battery pack based on the status information of the battery pack and the parameter of the battery pack. Communication logic between the electric tool and the battery pack is the same as communication logic between the charging device and the battery pack, and details are not described herein.

A terminal arrangement structure on an electric tool side is the same as the terminal arrangement structure on a charging device side, and details are not described herein.

An embodiment of this application further provides a data transmission system, including a charging apparatus and a battery pack. The battery pack is detachably engaged on the charging apparatus, and is configured to obtain electric energy from the charging apparatus. The charging apparatus includes at least a first digital communication module, a second digital communication module, and a first digital communication terminal connected to the first digital communication module and a second digital communication terminal connected to the second digital communication module. The first digital communication module is configured to perform digital communication in a first digital communication manner through the first digital signal terminal, and the second digital communication module is configured to perform digital communication in a second digital communication manner through the second digital signal terminal. The battery pack includes at least a third digital communication module, a fourth digital communication module, a third digital communication terminal connected to the third digital communication module, and a fourth digital communication terminal connected to the fourth digital communication module. The third digital communication module is configured to perform digital communication in the first digital communication manner through the third digital signal terminal, and the fourth digital communication module is configured to perform digital communication in the second digital communication manner through the fourth digital signal terminal. When the battery pack is engaged with the charging device, the third digital communication terminal is engaged with the first digital communication terminal, and the fourth digital communication terminal is engaged with the second digital communication terminal. A power supply system further includes a control module, configured to control the charging apparatus to perform digital communication with the battery pack in at least one of the first digital communication manner and the second digital communication manner.

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments only describe several implementations of this application, which are described specifically and in detail, but cannot be construed as a limitation to the patent scope. It should be noted that for a person of ordinary skill in the art, several transformations and improvements can be made without departing from the idea of this application. These transformations and improvements belong to the protection scope of this application. Therefore, the protection scope of this application shall be subject to the appended claims.

## Claims

1. A charging device, configured to charge a battery pack, **characterized in that** the charging device comprises:
a battery pack mounting portion, configured to detachably mount the battery pack, wherein the battery pack mounting portion comprises a plurality of electrical terminals, and the charging device is electrically connectable to the battery pack through the electrical terminals; and
a control module, wherein the control module is connected to the electrical terminals, and configured to obtain a parameter of the battery pack through the electrical terminals, and control a charging process according to the parameter of the battery pack; and
the control module comprises at least a first digital communication module and a second digital communication module, the electrical terminals comprise at least a first digital signal terminal and a second digital signal terminal, the first digital communication module is connected to the first digital signal terminal, and configured to perform digital communication in a first digital communication manner through the first digital signal terminal, and the second digital communication module is connected to the second digital signal terminal, and configured to perform digital communication in a second digital communication manner through the second digital signal terminal; and
when the charging device is connected to the battery pack, the charging device performs digital communication with the battery pack through at least one of the first digital signal terminal and the second digital signal terminal.

2. The charging device according to claim **1, characterized in that** the control module determines whether a digital signal matching the first digital communication module is received, and communicates by using the first digital communication module when the digital signal matching the first digital communication module is received; and
when the digital signal matching the first digital communication module is not received, the control module determines whether a digital signal matching the second digital communication module is received, and communicates by using the second digital communication module when the digital signal matching the second digital communication module is received.

3. The charging device according to claim 2, **characterized in that** in a charging process, when the control module detects that the first digital communication module fails to communicate, the control module performs digital communication through the second digital communication module, and controls the charging process to continue.

4. The charging device according to claim 3, **characterized in that** the control module further comprises a first analog communication module, the electrical terminals further comprise a first analog signal terminal connected to the first analog communication module, and the first analog communication module performs analog signal communication with the battery pack through the first analog signal terminal, to receive an external failure status signal and an activation status signal of the battery pack;
when the charging device performs digital communication through the first communication module, the charging device receives the failure status signal through the first analog communication module, and controls the charging process of the battery pack according to the received failure status signal; and
when the charging device performs digital communication through the second communication module, the charging device receives the parameter of the battery pack through the second digital communication module, and controls the charging process of the battery pack according to the parameter of the battery pack.

5. The charging device according to claim 2, **characterized in that** in the charging process, when the control module detects that the first digital communication module fails to communicate, the control module controls the charging device to stop charging the battery pack.

6. The charging device according to claim **1, characterized in that** the first digital communication manner is CAN communication, and the second digital communication manner is serial communication.

7. The battery pack according to claim 1, **characterized in that** the electrical terminals further comprise a first positive terminal, a first negative terminal, and a first analog signal terminal;
the first digital signal terminal comprises a first contact terminal and a second contact terminal, and the first contact terminal and the second contact terminal are insulated from each other; and
in a first direction, projections of the first contact terminal and the second contact terminal at least partially overlap, and the projections of the first contact terminal and the second contact terminal do not overlap with any one of the projections of the first positive terminal, the first negative terminal, the first analog signal terminal, and the second digital signal terminal, wherein
the first direction is perpendicular to an engaging direction of the battery pack, and is perpendicular to an arrangement direction of the first positive terminal, the first negative terminal, the first analog signal terminal, and the second digital signal terminal.

8. The battery pack according to claim **1, characterized in that** the electrical terminals further comprise a first positive terminal, a first negative terminal, and a first analog signal terminal;
the first digital signal terminal comprises a first contact terminal and a second contact terminal, and the first contact terminal and the second contact terminal are insulated from each other; and
in a first direction, projections of the first contact terminal and the second contact terminal are parallel, and the projections of the first contact terminal and the second contact terminal are parallel to projections of the first positive terminal, the first negative terminal, the first analog signal terminal, and the second digital signal terminal, wherein
the first direction is perpendicular to a direction in which the battery pack is engaged to the external device, and is perpendicular to an arrangement direction of the first contact terminal, the second contact terminal, the first positive terminal, the first negative terminal, the first analog signal terminal, and the second digital signal terminal.

9. An electrical device, **characterized in that** configured to be detachably connectable to a battery pack, to charge the battery pack or obtain electric energy from the battery pack, the electrical device comprising:
a battery pack mounting portion, configured to mount a battery pack, wherein the battery pack mounting portion comprises a plurality of electrical terminals, and the electrical device is electrically connectable to the battery pack through the electrical terminals;
a control module, wherein the control module is connected to the electrical terminals, and configured to obtain a parameter of the battery pack through the electrical terminals, and control a charging process according to the parameter of the battery pack; and
the control module comprises at least a first digital communication module and a second digital communication module, the electrical terminals comprise at least a first digital signal terminal and a second digital signal terminal, the first digital communication module is connected to the first digital signal terminal, and configured to perform digital communication in a first digital communication manner through the first digital signal terminal, and the second digital communication module is connected to the second digital signal terminal, and configured to perform digital communication in a second digital communication manner through the second digital signal terminal; and
when the electrical device is connected to the battery pack, the charging device performs digital communication with the battery pack through at least one of the first digital signal terminal and the second digital signal terminal.

10. A battery pack, configured to be engaged with the charging device according to any one of claims 1 to 8, **characterized in that** the battery pack comprises:
a housing;
a battery cell, wherein the battery cell is arranged in the housing, and configured to store or release electric energy;
a control module, wherein the control module is connected to the battery cell, and configured to detect a parameter of the battery cell and send the battery cell to an external electrical device, so that the charging device controls charging and discharging processes of the battery pack according to the parameter; and
an electrode holder, wherein the electrode holder is arranged on the housing, and comprises a plurality of electrical terminals, the plurality of electrical terminals are connected to the control module, and the battery pack is engaged with the electrical device through the electrical terminals and interacting with the electrical device, wherein
the control module comprises at least a third digital communication module and a fourth digital communication module, the electrical terminals comprise at least a third digital signal terminal and a fourth digital signal terminal, the third digital communication module is configured to perform digital signal communication with the charging device in a first digital communication manner through the third digital signal terminal, and the fourth digital communication module is configured to perform digital signal communication with the charging device in a second digital communication manner through the fourth digital signal terminal; and
when the battery pack is connected to the charging device, the third digital signal terminal is electrically connected to the first digital signal terminal, the fourth digital signal terminal is electrically connected to the second digital signal terminal, and the battery pack performs digital signal communication with the charging device through at least one of the third digital signal terminal and the fourth digital signal terminal.

11. The battery pack according to claim 10, **characterized in that** the first digital communication manner is CAN communication, and the second digital communication manner is serial communication.

12. The battery pack according to claim 10, **characterized in that** the electrical terminals further comprise a second analog signal terminal, and the second analog signal terminal is configured to perform analog signal communication with the engaged charging device;
the electrical terminals further comprise a second positive terminal and a second negative terminal; and
the electrode holder comprises five terminal slots, a partition is arranged between adjacent terminal slots, an extending direction of each terminal slot is perpendicular to an engaging direction of the battery pack, and the five terminal slots are configured to respectively accommodate the second positive terminal, the second negative terminal, the second analog signal terminal, the third digital signal terminal, and the fourth digital signal terminal, wherein
the third digital signal terminal comprises a third contact terminal and a fourth contact terminal, the third contact terminal and the fourth contact terminal are arranged in a same terminal slot, the third contact terminal and the fourth contact terminal are arranged in the extending direction of the terminal slot, and the third contact terminal and the fourth contact terminal are insulated from each other.

13. The battery pack according to claim 10, **characterized in that**
the electrical terminals further comprise a second analog signal terminal, and the second analog signal terminal is configured to perform analog signal communication with the engaged charging device;
the electrical terminals further comprise a second positive terminal and a second negative terminal; and
the electrode holder comprises six terminal slots, a partition is arranged between adjacent terminal slots, and an extending direction of each terminal slot is perpendicular to an engaging direction of the battery pack; and
the third digital signal terminal comprises a third contact terminal and a fourth contact terminal, and the six terminal slots are configured to respectively accommodate the second positive terminal, the second negative terminal, the second analog signal terminal, the third contact terminal, the fourth contact terminal, and the fourth digital signal terminal.

14. A data transmission system, **characterized in that** comprising a charging apparatus and a battery pack, wherein the battery pack is detachably mounted on the charging apparatus, and configured to obtain electric energy from the charging apparatus;
the charging apparatus comprises at least a first digital communication module, a second digital communication module, a first digital communication terminal connected to the first digital communication module, and a second digital communication terminal connected to the second digital communication module, the first digital communication module is configured to perform digital communication in a first digital communication manner through the first digital signal terminal, and the second digital communication module is configured to perform digital communication in a second digital communication manner through the second digital signal terminal;
the battery pack comprises at least a third digital communication module, a fourth digital communication module, a third digital communication terminal connected to the third digital communication module, and a fourth digital communication terminal connected to the fourth digital communication module, the third digital communication module is configured to perform digital communication in the first digital communication manner through the third digital signal terminal, and the fourth digital communication module is configured to perform digital communication in the second digital communication manner through the fourth digital signal terminal;
when the battery pack is engaged with the charging device, the third digital communication terminal is engaged with the first digital communication terminal, and the fourth digital communication terminal is engaged with the second digital communication terminal; and
the power supply system further comprises a control module configured to control the charging apparatus to perform digital communication with the battery pack in at least one of the first digital communication manner and the second digital communication manner.
